Europäisches Patentamt

European Patent Office

Office européen des brevets

(19)

(11) Publication number: **0 082 825**
**A1**

# (12) EUROPEAN PATENT APPLICATION

(21) Application number: **82830296.8**

(22) Date of filing: **06.12.82**

(51) Int. Cl.³: **F 24 H 1/18**
**F 24 J 3/02**

(30) Priority: **18.12.81 IT 2568581**

(43) Date of publication of application:
**29.06.83 Bulletin 83/26**

(84) Designated Contracting States:
**AT BE CH DE FR GB LI LU NL SE**

(71) Applicant: **P.D. MECCANICA S.r.L.**
**Via Corvo, 144**
**I-36031 Dueville Vicenza(IT)**

(72) Inventor: **Polidoro, Graziano**
**Via Corvo, 144**
**I-36031 Dueville (Vincenza)(IT)**

(72) Inventor: **Dal Pra', Giorgio**
**Via Padovana, 80**
**I-37040 Arcole (Verona)(IT)**

(72) Inventor: **Capitanio, Attilio**
**Via Dindarello, 24**
**I-36031 Lupia (Vicenza)(IT)**

(74) Representative: **Cicogna, Franco**
**Ufficio Internazionale Brevetti Dott.Prof. Franco Cicogna**
**Via Visconti di Modrone, 14/A**
**I-20122 - Milano(IT)**

(54) **High efficiency apparatus for producing thermal power.**

(57) The present invention relates to a high efficiency apparatus for producing thermal power, which comprises a tank (1) for collecting the heated water, in the inside thereof a condenser (5) is provided for storing the collected thermal power, a circuit for using sanitary hot water and an auxiliary circuit, automatically driven, for increasing the outside storing. The condenser circuit is coupled to an evaporating circuit (11) externally located with respect to the tank and communicating with a compressor (10).

Fig. 1

EP 0 082 825 A1

## BACKGROUND OF THE INVENTION

The present invention relates to a high efficiency apparatus for producing thermal power or energy.

As it is well known, the great power requirements due to the increasing difficulties related to the finding of conventional power sources, such as oil and gas, brought about the need of searching upon new alternative power sources and providing high efficiency apparatus.

On the other hand, the obtained results have made well clear the difficulties associated with that problem, since the proposed solutions are very expensive and scarcely reliable.

## SUMMARY OF THE INVENTION

Thus, the task of the present invention is to solve the thereinabove mentioned problem by providing such an apparatus which is effective to meet the power requirements at comparatively low costs.

Within that task, it is a primary object of the present invention to provide a high efficiency apparatus for producing thermal power, while being very reliable and sure in operation.

Another object of the present invention is to provide such an apparatus which, based on the gas expansion concept, (the so-called Carnot concept), is effective to provide very satisfactory results, with a reduced size and very low costs.

The thereinabove mentioned task and objects, as well as yet other objects which will become more apparent thereinafter, are achieved by a high efficiency apparatus for producing thermal power, characterized in that it comprises a tank for collecting the heated water, in the inside thereof a condenser circuit is provided for storing the collected thermal power, a circuit for using sanitary hot water and an auxiliary circuit, automatically driven, for increasing the outside storing, said condenser circuit being coupled to an evaporating circuit externally located with respect to the tank and communicating with a compressor.

## BRIEF DESCRIPTION OF THE DRAWINGS

Further characteristics and advantages will become more apparent hereinafter through the following detailed description of a preferred though not exclusive embodiment of a high efficiency apparatus for producing thermal power, being illustrated in the accompanying

drawings, where:

fig.1 is a partially broken away apparatus representing the high efficiency apparatus according to the present invention;

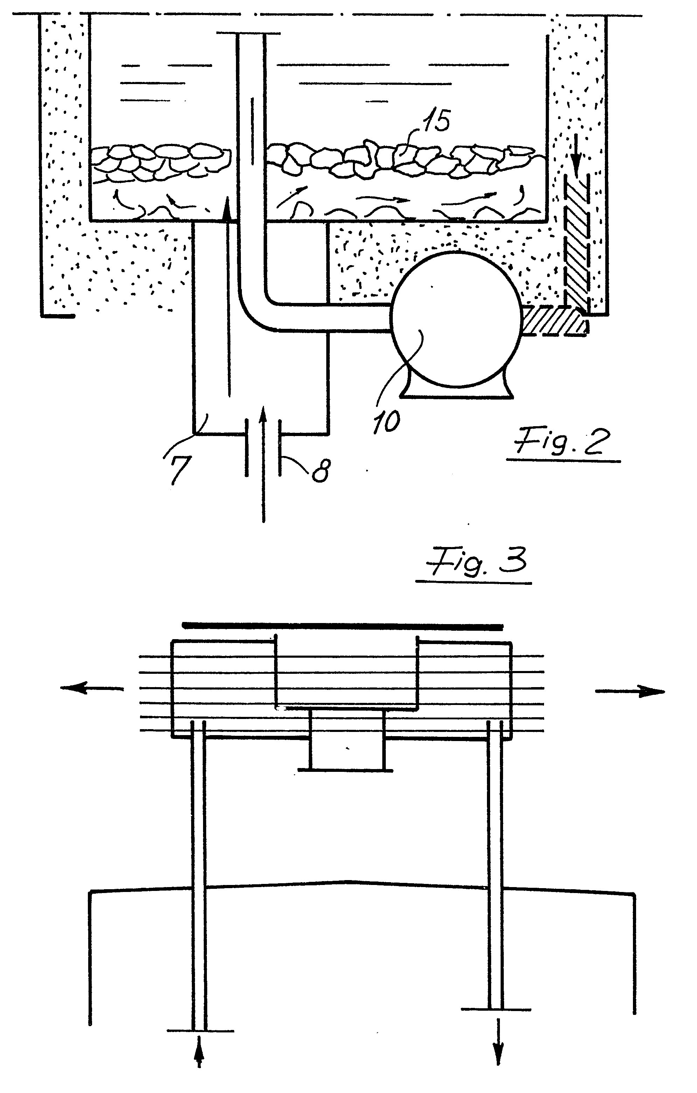

fig.2 represents a detail of the compressor and of the inlet coupling at the tank, at the outlet of the compressor;

fig.3 represents the aeolic power producing assembly;

and

fig.4 represents the condenser.

### DESCRIPTION OF THE PREFERRED EMBODIMENT

With reference to the numbers references of the thereinabove mentioned figures, the high efficiency apparatus for producing thermal power, according to the present invention, comprises a tank 1 for collecting or storing the heated water, wich is covered, on the outside thereof, by a thermally insulating layer indicated at 2.

The storing tank 1 is located within an optically transparent envelope 3 effective to provide, as it will become more apparent thereinbelow, the so-called greenhouse effect, due to the heating by the sun rays.

At the top thereof the outer envelope
3 is closed by a cover 4.

The apparatus, which has a substantially
cylindrical overall shape, has such a size which is
slightly greater than that of a conventional household
electrical appliance.

. In the inside of said storing tank 1
there is provided a condenser circuit 5 which, for
high efficiency reasons is completely immersed in
said storing tank, thereby preventing thermal losses.

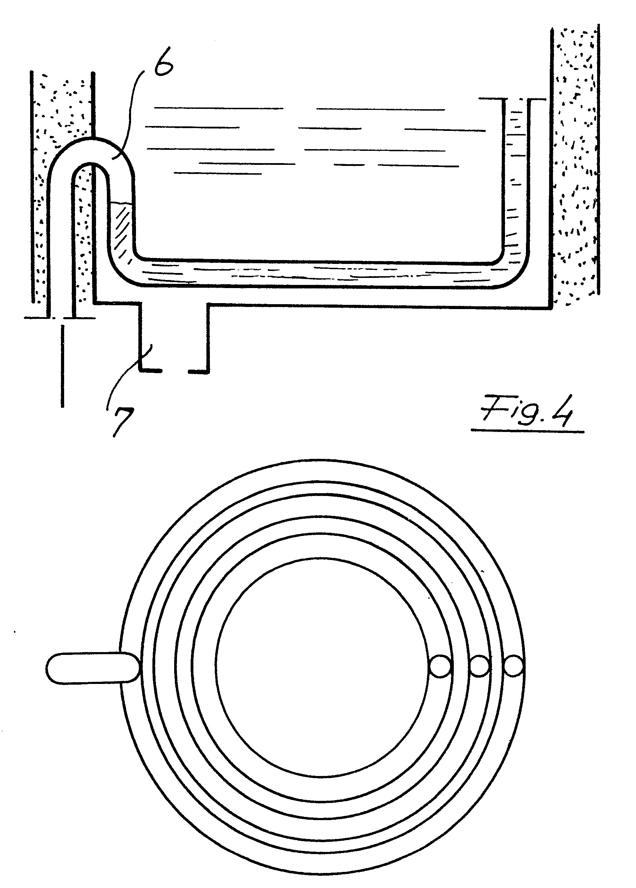

At the outlet end of said condenser circuit,
as it is clearly illustrated in fig.4, there is provided
a siphon or trap portion 6, effective to form a
liquefied gas layer, as obtained from the comparatively
low temperature present in the inside of said storing
tank.

In order to further improve the thermal
exchange there is provided, at the base or bottom portion
of said storing tank 1, a throwing trap 7, thereat there
is provided the return inlet, indicated at 8, of the
using circuit and the inlet of the gases exiting the
compressor 10 at high temperature.

The compressor 10 is coupled to an evaporator

circuit 11,located externally with respect to the storing tank 1 and communicating with said condenser circuit 5.

Said using circuit may consist of any suitable circuits for conditioning rooms and the like.

On the bottom of the storing tank 1 there is provided a quartzite layer,indicated at 15, effective to aid the mixing through the overall cross-section of the storing tank of the water to be heated, in order to prevent preferential streams from forming.

On the outside of the storing tank which,as thereinabove mentioned,is thermally insulated,the mentioned evaporating circuit 11 extends,coiled on the outside of the insulating material,thereby allowing for the gases,driven by a suitable compressor,to provide the so-called greenhouse effect,by exploiting the sun rays and the optically transparent outside envelope or cover 3.

In order to further increase the thermal power to be brought to the evaporator a thermally insulated circuit has been provided in said evaporator, indicated at 20 in the accompanying drawings,which affords the possibility of absorbing heat from the ventilating air contacting the apparatus, without disrupting the mentioned greenhouse effect.

That circuit, which uses a carrier fluid, eetends inside the evaporator, thereby the latter is cooled by the impinging gases and heat is consequently absorbed.

The circulating fluid exits the apparatus through the exchanger, to be heated again, considering that in said evaporator the fluid is being cooled. The carrier fluid is driven by a reduced size circulating device, which is controlled by a temperature switch as in the encompassing region, which provides the mentioned greenhouse effect, the heat is not sufficient to meet the evaporator requirements.

An especially provided bypass path, inicated at 21, allows for the apparatus, in summer or under particular outside heat conditions, to operate also with the compressor 10 in the off or idling condition, since this circuit is able of practically operate as a solar compressor.

The apparatus circuits allow for thermal power to be collected, as produced in the encompassing environment both in the form of solar power, aeð𝔩c power, and

in the form of power irradiated by the light.

To that end, at the base or bottom portion of the transparent outer envelope 3, there is provided a parabolic shield 30 which, by preventing the sun rays from being scattered, concentrates the latter on the evaporator.

The apparatus operates, as alternative power sources are not available, by automatically selecting the system to be adopted in order to obtain the maximum efficiency.

If the power sources are individually lacking, then the apparatus starts a polyvalent type of process of the several circuits.

The apparatus, as designed, is able of suitably collect and hold any heat source which is present.

Thus the apparatus is able of operating even with poor possibilities of thermal absorption and, in this case, the use of the compressor is prolonged depending on the contingent needs.

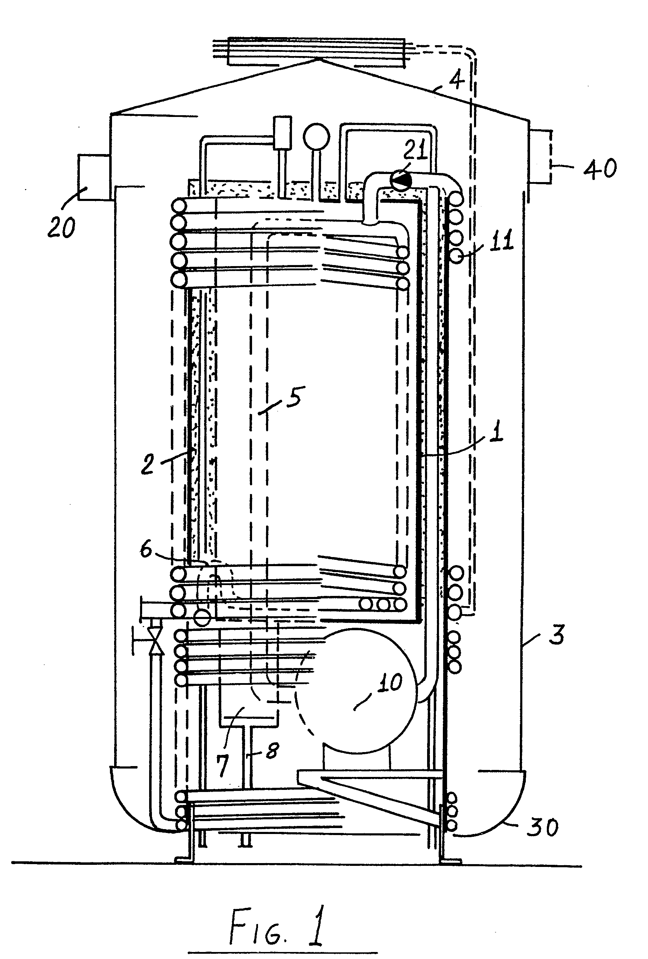

The apparatus may also be provided, depending on the needs, with a circuit for refrigerating rooms in summer, schematically indicated at 40 in fig.1, by increasing the refrigerating efficiency values with the use of conventional exhausters.

In actual practice the disclosed apparatus is able of contempraneously meeting a double requirement: the first is that of producing refrigerated air and the second consists of the production of hot water for sanitary use, while maintaining a single body of reduced size.

The apparatus, as designed, may be located on any balconies of suitable size, and it does not require any stack to be used, thereby reducing at a minimum the air pollution.

It should also be noted that the elctrical power for operating the apparatus is very reduced.

Moreover, in order to further improve the already high efficiency of the apparatus, the latter is covered by a particular paint, in order to maximally exploit any light forms to increase the thermal power. That paint consists of a mixture of an opaque synthet black enamel and sand, effective to provide an exchanger surface simultaneously black and greatly porous, thereby preventing the sun rays from being rerlected.

In addition to the mentioned paint on the outside surface of the evaporator 11, a quartzite material is also added, effective to provide the so-called beach effect, thereby further improving efficiency.

From the above disclosure it will be clear that the apparatus according to the present invention fully achieves the intended objects.

In particular, the fact is to be pointed out that the apparatus allows for "clean" power to be produced, with a very high efficiency level, thereby the subject apparatus will be very advantageous in all of the practical applications thereof.

The invention, as disclosed, is susceptible to several modifications and variations, all thereof fall within the scope of the invention idea.

Moreover all of the details may be replaced by other technically equivalent elements.

In practicing the invention the used materials, as well as the contingent shape and size, will be any depending on the needs.

# C L A I M S

1- A high efficiency apparatus for producing thermal power, characterized in that it comprises a tank for collecting the heated water, in the inside thereof a condenser circuit is provided for storing the collected thermal power, a circuit for using sanitary hot water and an auxiliary circuit, automatically driven, for increasing the outside storing, said condenser circuit being coupled to an evaporating circuit externally located with respect to the tank and communicating with a compressor.

2- A high efficiency apparatus, according to the preceding claims, characterized in that said storing tank is thermally insulated on the outside thereof and located within an outer envelope, the latter being optically transparent and effective to provide a greenhouse effect.

3- A high efficiency apparatus, according to the preceding claims, characterized in that said condenser circuit is completely immersed in the inside of said tank.

4- A high efficiency apparatus, according to one or more of the preceding claims, characterized in that it comprises, in the inside of said tank, at the end of said condenser circuit, a siphon or trap assembly, effective to form a gas layer in said condenser, in the liquefied condition, and produced by the comparatively low temperature inside said tank.

5- A high efficiency apparatus, according to one or more of the preceding claims, characterized in that it comprises a throwing trap communicating with the inlet of. said using circuit and located at the bottom of said tank, said throwing trap including in the inside thereof the inlet duct of the gases leaving the compressor at high temperatures.

6- A high efficiency apparatus, according to one or more of the preceding claims, characterized in that it comprises, in the inside of said tank, a quartzite layer effective to aid the mixing through the overall tank cross-section of the water to be heated.

7- A high efficiency apparatus, according to one or more of the preceding claims, characterized in that it comprises a circuit, thermally insulated in said evaporator, effective to absorb the heat of the ventilating air, without disrupting said greenhouse effect.

8- A high efficiency apparatus, according to one or more of the preceding claims, characterized in that it comprises a bypass path between said condenser and said evaporator effective to allow for said apparatus to operate, under predetermined outside heat conditions, without said compressor.

9- A high efficiency apparatus, according to one or more of the preceding claims, characterized in that it comprises a circuit for refrigerating rooms, effective to simultaneously operate with said hot water using circuit.

10-A high efficiency apparatus, according to one or more of the preceding claims, characterized in that it comprises, at the bottom of said outer envelope, a parabolic mirror effective to concentrate the sun rays on said evaporator.

11-A high efficiency apparatus, according to one or more of the preceding claims, characterized in that it operates with solar power, wind power, light power, automatic means being further provided for selecting the supply system to be used.

FIG. 1

*Fig. 2*

*Fig. 3*

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 436 339 (PHILIPS' GLOEILAMPENFABRIEKEN) *Claim 1; figure 1* | 1,3 | F 24 H 1/18 F 24 J 3/02 |
| X | DE-A-2 548 076 (LICENTIA) *Figure 1* | 1,2,3 | |
| X | FR-A-2 418 425 (TERMODINAMICA) *Figures; claim 1* | 1,3 | |
| X | GB-A-2 021 755 (MERLONI IGIENICO SANITARI) *Abstract* | 1,3,7 | |
| A | DE-A-2 728 398 (FRIESS) *Figure 1* | 1,3,6 | |
| A | FR-A-2 385 054 (PARAIN) *Figure 9* | 2 | TECHNICAL FIELDS SEARCHED (Int. Cl. ³) F 24 H F 24 D F 24 J |
| A | US-A-2 167 576 (KISER) *Figure 5; claim 1* | | |

The present search report has been drawn up for all claims

| Place of search THE HAGUE | Date of completion of the search 10-03-1983 | Examiner VAN GESTEL H.M. |
|---|---|---|

EPO Form 1503 03 82